# EUROPÄISCHE PATENTSCHRIFT

(11) **EP 3 416 852 B1**
(45) Veröffentlichungstag und Bekanntmachung des Hinweises auf die Patenterteilung: **26.06.2024**
(21) Anmeldenummer: 17705846.8
(22) Anmeldetag: 15.02.2017
(51) Int. Cl.: F21S 45/70, F21S 41/176, B60Q 11/00

(54) **LICHTMODUL**
LIGHT MODULE
MODULE D'ÉCLAIRAGE

(30) Priorität: 15.02.2016 DE 102016102570
(43) Veröffentlichungstag der Anmeldung: 26.12.2018
(73) Patentinhaber: Automotive Lighting Reutlingen GmbH, 72762 Reutlingen (DE)
(72) Erfinder: ROSENHAHN, Ernst-Olaf, 72147 Nehren (DE); BUCHBERGER, Christian, 72770 Reutlingen (DE); LICHT, Martin, 72762 Reutlingen (DE); KNITTEL, Joachim, 72762 Reutlingen (DE)
(74) Vertreter: DREISS Patentanwälte PartG mbB
(86) Internationale Anmeldenummer: PCT/EP2017/053353
(87) Internationale Veröffentlichungsnummer: WO 2017/140705

(56) Entgegenhaltungen:
- EP-A1- 3 415 808
- EP-A2- 2 781 408
- WO-A1-2014/072226
- DE-A1-102014 118 408
- DE-A1-102014 202 294
- DE-A1-102014 202 943
- DE-A1-102014 205 606
- KR-A- 20160 012 468
- US-A1- 2012 050 691
- US-A1- 2014 168 940

## Beschreibung

Die Erfindung betrifft ein Lichtmodul für einen Kfz-Scheinwerfer gemäß dem Oberbegriff des Anspruchs 1.

Im Bereich der Kfz-Beleuchtung, insbesondere bei Kfz-Scheinwerfern, ist die Realisierung von lichtstarken Beleuchtungseinrichtungen auf kleinem Bauraum von Interesse. Insofern wird angestrebt, möglichst leistungsstarke Lichtquellen mit möglichst hohen Leuchtdichten zu verwenden.

Mit Laserlichtquellen, beispielsweise Halbleiter-Laserdioden, lassen sich hohe Leuchtdichten und hohe Strahlungsleistungen erzielen. Allerdings strahlen Laserlichtquellen aufgrund ihres Funktionsprinzips meist nahezu monochromatisches, kohärentes und stark kollimiertes Laserlicht aus. Solches Licht kann in dieser Form nicht unmittelbar als abgestrahltes Licht der Beleuchtungseinrichtung verwendet werden.

Im Bereich der Kfz-Beleuchtung muss die abgestrahlte Lichtverteilung bestimmte, in der Regel gesetzlich vorgegebene Eigenschaften aufweisen. Für die Frontlichter eines Kraftfahrzeuges ist in der Regel weißes Licht erwünscht.

Laserlichtquellen werden daher meist in Kombination mit einem Wellenlängenkonverter eingesetzt. Dabei wird das Laserlicht in diffuses und weitgehend inkohärentes, weißes Licht umgewandelt. Aus der DE 10 2012 220 481 A1 und der US 8,400,011 B2 sind beispielsweise Lichtmodule mit einer Laserlichtquelle und einem Photolumineszenzkonverter bekannt. Durch Bestrahlung mit dem Laserlicht kann der Photolumineszenzkonverter z.B. aufgrund von Photolumineszenz ein Licht mit anderen Wellenlängen abgeben. Die so erzielte Sekundärlichtverteilung umfasst das umgewandelte Licht und gegebenenfalls auch gestreute Anteile des eingestrahlten Lichts, und ist daher für die Zwecke der Kfz-Beleuchtung nutzbar.

Dem Wellenlängenkonverter kommt insofern eine sicherheitsrelevante Bedeutung zu, da unumgewandeltes Laserlicht potenziell gefährlich ist. Bei den typisch hohen Strahlungsleistungen von Laserlichtquellen können Verkehrsteilnehmer stark geblendet oder das menschliche Auge verletzt werden. Wird der Wellenlängenkonverter beschädigt, kann eine Gefährdung durch aus der Beleuchtungseinrichtung austretende, stark kollimierte und intensive Laserstrahlen auftreten.

Um Beschädigungen des Konverters zu detektieren und den Laser gegebenenfalls abzuschalten, ist in der DE 10 2012 220 481 A1 und der US 8,400,011 B2 eine Detektionseinrichtung zum Detektieren der Strahlungsintensität vorgesehen ist. Bei derartigen Sicherheitsvorrichtungen können vergleichsweise aufwändige optische und elektronische Komponenten nötig sein.

Aus der DE 10 2012 220 472 A1 ist eine Sicherheitsvorrichtung bekannt, bei der eine Blende an einer Abstrahlvorrichtung oder im Strahlengang zwischen dem Photolumineszenzelement und der Abstrahloptik angeordnet ist. Diese Blende muss präzise in Bezug auf das Photolumineszenzselements und die Laserlichtquelle justiert werden. Daher ist eine Anpassung der Sicherheitseinrichtungen an die geometrische Ausgestaltung der jeweiligen Beleuchtungsvorrichtung erforderlich, die je nach Fahrzeugtyp und Einsatzzweck variieren kann. Eine Auslegung der Beleuchtungseinrichtung für andere Zwecke (z.B. Tagfahrlicht, Fernlicht, Abblendlicht) oder Designänderung (z.B. Modellanpassung für anderen Fahrzeugtyp) sind daher oft mit Umgestaltungen der Sicherheitseinrichtung verbunden. Außerdem muss konstruktiv sichergestellt sein, dass die Blende nicht ungewollt ihre Position verändert.

Der vorliegenden Erfindung liegt die Aufgabe zugrunde, durch flexibel an verschiedene Bauformen anpassbare Maßnahmen eine Gefährdung durch austretende Laserstrahlung möglichst zuverlässig zu verhindern.

Diese Aufgabe wird durch ein Lichtmodul gemäß Anspruch 1 gelöst. Das Lichtmodul ist insbesondere zum Einsatz in KFZ-Beleuchtungseinrichtungen, vorzugsweise KFZ-Scheinwerfern, ausgelegt. Als Lichtmodul wird im vorliegenden Zusammenhang die lichtabgebende Baueinheit einer Beleuchtungseinrichtung verstanden. Die Aufgabe wird jedoch auch durch eine Beleuchtungseinrichtung mit den Merkmalen des beschriebenen Lichtmoduls gelöst, ohne dass eine modulare Zusammenfassung als Baueinheit vorliegt.

Das Lichtmodul umfasst eine Laserlichtquelle zur Ausstrahlung eines Primärlichtbündels aus Laserlicht. Das Primärlichtbündel ist charakterisiert durch einen primären Spektralbereich, d.h. die Wellenlängen oder der Wellenlängenbereich des Laserlichts ist auf diesen primären Spektralbereich beschränkt. Das Primärlichtbündel ist außerdem dadurch charakterisiert, dass es in einem primären Raumwinkelbereich um eine primäre Strahlrichtung herum verläuft.

Das Lichtmodul umfasst außerdem einen Wellenlängenkonverter, auf welchen das Primärlichtbündel trifft und welcher derart ausgebildet ist, dass durch das auftreffende Primärlichtbündel eine sekundäre Lichtverteilung aus Sekundärlicht ausgestrahlt wird. Die sekundäre Lichtverteilung ist charakterisiert durch einen sekundären Spektralbereich und dadurch, dass die sekundäre Lichtverteilung einen sekundären Raumwinkelbereich ausfüllt. Die Laserlichtquelle ist derart ausgebildet und angeordnet, dass das Primärlichtbündel in dem primären Raumwinkelbereich und um die primäre Strahlrichtung herum verlaufend auf dem Wellenlängenkonverter auftrifft.

Das Lichtmodul umfasst ferner eine Abstrahloptikeinrichtung zum Umformen der sekundären Lichtverteilung in die eigentlich genutzte Abstrahllichtverteilung des Lichtmoduls.

Zur Bereitstellung der Sicherheitsfunktion ist ein primärer Detektor und ein sekundärer Detektor zur Messung von Strahlungsintensität vorgesehen. Der primäre Detektor ist derart angeordnet, dass eine Strahlungsintensität messbar ist, welche ausgehend von dem Wellenlängenkonverter betrachtet innerhalb des primären Raumwinkelbereichs um die primäre Strahlrichtung vorliegt. Der sekundäre Detektor ist derart angeordnet, dass eine Strahlungsintensität in einem Raumbereich messbar ist, der ausgehend von dem Wellenlängenkonverter betrachtet außerhalb des primären Raumwinkelbereichs um die primäre Strahlrichtung herum vorliegt.

Insbesondere ist der sekundäre Detektor derart ausgebildet und angeordnet, dass eine Strahlungsintensität messbar ist, die innerhalb des sekundären Raumwinkelbereichs aber außerhalb des primären Raumwinkelbereichs vorliegt.

Durch die genannte Ausgestaltung kann ermittelt werden, ob sich die räumliche Verteilung der Strahlungsintensität in einer Art und Weise verändert, welche auf einen beeinträchtigten oder defekten Wellenlängenkonverter hinweist. Ohne die Wirkung des Wellenlängenkonverters liegt im Wesentlichen nur die primäre Lichtverteilung vor. Diese unterscheidet sich stark von der sekundären Lichtverteilung. Bei Veränderung der gemessenen Eigenschaften der Strahlungsintensität über ein vorgegebenes Schwellwertkriterium hinaus kann dann die Laserlichtquelle deaktiviert werden. Steigt die von dem primären Detektor gemessene Strahlungsintensität deutlich im Vergleich zu der von dem sekundären Detektor gemessenen Strahlungsintensität an, so weist dies auf eine unterbliebene Umwandlung des Laserlichts in die sekundäre Lichtverteilung hin. Eine Ursache hierfür kann beispielsweise ein defekter Wellenlängenkonverter sein. In dieser Situation besteht die Gefahr, dass gefährliches Laserlicht aus dem Lichtmodul austritt. Durch die genannte Ausgestaltung kann bei Detektion des Gefährdungsszenarios die Laserlichtquelle deaktiviert werden.

Die beschriebene Überwachung ermöglicht außerdem eine zuverlässige Beurteilung des Funktionszustandes des Wellenlängenkonverters. Insbesondere ist es möglich, die Qualität des Wellenlängenkonverters, eine etwaige Abnutzung oder einen Grad der Beschädigung zu ermitteln. Somit lassen sich für das Lichtmodul Diagnosefunktionen realisieren und die Betriebssicherheit des Lichtmoduls überwachen. Ein Grad der Beschädigung des Wellenlängenkonverters kann beispielsweise aus dem Verhältnis der Strahlungsintensitäten bestimmt werden, die von dem primären Detektor und dem sekundären Detektor ermittelt werden. Je schwächer die von dem sekundären Detektor erfasste Strahlungsintensität im Verhältnis zu der von dem primären Detektor erfassten Strahlungsintensität ist, desto geringer ist die Wirkung des Wellenlängenkonverters auf die primäre Lichtverteilung.

Die beschriebenen Maßnahmen lassen sich weitgehend unabhängig von der konkreten Ausgestaltung der Beleuchtungseinrichtung realisieren. Die weiteren optischen oder konstruktiven Bauteile des Lichtmoduls können unabhängig von Laserlichtquelle und Wellenlängenkonverter verändert werden. Das Lichtmodul ermöglicht daher eine große Gestaltungsfreiheit. Das Sicherheitskonzept ist weitgehend unabhängig von typspezifischen oder fahrzeugspezifischen Komponenten.

Die Laserlichtquelle kann grundsätzlich ein komplexes Verbundbauteil sein und beispielsweise weitere Optikeinrichtungen wie Primäroptiken, Vorsatzlinsen oder Strahlformungseinrichtungen umfassen. Entscheidend ist, dass das Primärlichtbündel vor Auftreffen auf den Wellenlängenkonverter in dem primären Raumwinkelbereich um die primäre Strahlrichtung herum verläuft.

Das Primärlichtbündel trifft im funktionsfähigen und störungsfreien Zustand zunächst auf den Wellenlängenkonverter. Der Wellenlängenkonverter wandelt zumindest einen Anteil des auftreffenden Laserlichts in Licht mit einer anderen Wellenlänge oder anderen Wellenlängen um, insbesondere in Licht mit größerer Wellenlänge. Diese Umwandlung kann z.B. durch Photolumineszenz oder Fluoreszenz erfolgen. Ein weiterer Anteil des Laserlichts kann beispielsweise elastisch und/oder inelastisch an dem Wellenlängenkonverter gestreut werden und sich mit umgewandeltem Licht mischen. Insgesamt entsteht dadurch das Sekundärlicht mit Wellenlängen im sekundären Spektralbereich.

Das Sekundärlicht ist das eigentliche, für die Zwecke der KFZ-Beleuchtung nutzbare Licht. Es weist insbesondere die erforderlichen spektralen Eigenschaften auf. Beispielsweise besteht das Sekundärlicht aus weitgehend inkohärentem, z.B. weißem Licht. Allgemein ist der sekundäre Spektralbereich abweichend von dem primären Spektralbereich. Vorzugsweise umfasst der sekundäre Spektralbereich längere Wellenlängen als der primäre Spektralbereich. Möglich ist insbesondere, dass der sekundäre Spektralbereich größer ist und den primären Spektralbereich vollständig umfasst.

Der sekundäre Raumwinkelbereich, welchen die sekundäre Lichtverteilung ausfüllt, ist insbesondere größer als der primäre Raumwinkelbereich. Bei Anregung durch das Primärlichtbündel weist der Wellenlängenkonverter insbesondere eine Abstrahlcharakteristik eines Lambert-Strahlers auf. Insofern strahlt der angeregte Wellenlängenkonverter vorzugsweise in einen gesamten Halbraum ab. Da sich die abgestrahlte Leistung der sekundären Lichtverteilung auf einen größeren ausgeleuchteten Raumwinkel verteilt, sind die Auswirkungen der von den Detektoren erfassten Intensitätsanteile auf die letztlich erzeugte abgestrahlte Lichtverteilung gering.

Die Abstrahloptikeinrichtung schließlich erfasst die sekundäre Lichtverteilung und formt sie in die Abstrahllichtverteilung des Lichtmoduls um. Die Abstrahllichtverteilung ist insbesondere um eine Hauptabstrahlrichtung konzentriert. Diese kann beispielsweise bei Einbau in einem Kraftfahrzeug in Fahrtrichtung weisen. Grundsätzlich kann die Abstrahloptikeinrichtung als Reflektor ausgebildet sein, beispielsweise als ein sich um den Wellenlängenkonverter wölbender Hohlreflektor. Bei KFZ-Scheinwerfern kommen insbesondere parabolische Reflektoren zum Einsatz. Grundsätzlich kann die Abstrahloptikeinrichtung aber auch von Linsenmitteln gebildet sein oder Linsenmittel umfassen.

Vorzugsweise ist der primäre Detektor und/oder der sekundäre Detektor derart ausgebildet, dass nur Strahlungsintensität von Licht mit Wellenlängen in dem primären Spektralbereich gemessen wird. Wenn die Detektoren nur auf Licht im primären Spektralbereich ansprechen, so kann eine höhere Detektionsgenauigkeit erreicht werden. Ist der Wellenlängenkonverter zwar beschädigt oder beeinträchtigt, jedoch nicht völlig aus dem Strahlengang entfernt, so wird in der Regel noch ein gewisser Anteil an Licht umgewandelt. In diesem Fall wird immer noch eine Lichtverteilung erzeugt, welche einen größeren Raumwinkelbereich als die primäre Lichtverteilung ausfüllt. Durch die wellenlängenspezifische Detektion kann dann vermieden werden, dass eine Fehlfunktion nicht zuverlässig erkannt wird.

Eine auf den primären Spektralbereich beschränkte Messung kann dadurch erzielt werden, dass im Strahlengang vor dem Detektor ein Wellenlängenfilter angeordnet ist, beispielsweise ein Glasfilterelement mit wellenlängenspezifischer Transmission.

Nach einer vorteilhaften Ausgestaltung ist eine primäre Umlenkfläche vorgesehen, welche ausgehend von dem Wellenlängenkonverter betrachtet in der primären Strahlrichtung beabstandet angeordnet ist. Insofern ist die primäre Umlenkfläche bei störungsfreiem Betrieb im Strahlengang nach dem Wellenlängenkonverter angeordnet, d.h. in Ausbreitungsrichtung der Strahlung versetzt zum Wellenlängenkonverter angeordnet. Die primäre Umlenkfläche ist derart ausgebildet, dass zumindest ein Anteil des auf die primäre Umlenkfläche treffenden Lichtes zu dem primären Detektor gelenkt wird. Insofern erfasst die primäre Umlenkfläche solches Licht, welches ausgehend von dem Wellenlängenkonverter in dem Primärraumwinkelbereich um die primäre Strahlrichtung verläuft und lenkt dieses Licht zumindest teilweise oder vollständig auf den primären Detektor.

Bei beschädigtem oder aus dem Strahlengang entferntem Wellenlängenkonverter erfasst die primäre Umlenkfläche somit gerade die in dem primären Raumwinkelbereich verlaufende Lichtverteilung, welche die potentiell gefährlichen Laserstrahlen enthält. Dieses potentiell gefährliche Licht wird durch die Umlenkfläche derart abgelenkt, dass es nicht von der Abstrahloptikeinrichtung erfasst wird. Insofern bildet die primäre Umlenkfläche eine Sicherheitseinrichtung, welche funktional unabhängig von der Überwachung durch den primären und den sekundären Detektor ist. Dadurch kommen zwei voneinander unabhängige Sicherheitsprinzipien zum Einsatz. Einer Gefährdung durch ungewollt austretende Laserstrahlung wird zuverlässig entgegengewirkt. Die primäre Umlenkfläche bleibt auch dann als Sicherheitseinrichtung wirksam, wenn der primäre und/oder sekundäre Detektor und/oder eine damit zusammenwirkende Steuerelektronik in ihrer Funktion beeinträchtigt ist.

Die primäre Umlenkfläche ist erfindungsgemäß derart ausgebildet und orientiert, dass das auf sie treffende Licht in eine rückwärtige Richtung umgelenkt wird.

Der primäre Detektor ist vorzugsweise auf einer der primären Umlenkfläche abgewandten Seite des Wellenlängenkonverters angeordnet. Dadurch wird die Betriebssicherheit weiter erhöht, da im Störfall die von der primären Umlenkfläche erfasste Laserstrahlung in einem Bereich außerhalb des Wirkungsbereichs der Abstrahloptikeinrichtung gelenkt wird. Außerdem wird vermieden, dass der primäre Detektor aufgrund seiner geometrischen Ausdehnung die sekundäre Lichtverteilung unerwünscht beeinträchtigt. Insbesondere kann der primäre Detektor außerhalb des Bereichs angeordnet sein, in welchem sich bei störungsfreiem Betrieb die sekundäre Lichtverteilung erstreckt.

Vorzugsweise ist die primäre Umlenkfläche derart ausgebildet, dass sie ausgehend von dem Wellenlängenkonverter betrachtet nur den primären Raumwinkelbereich überdeckt. Insbesondere ist dabei aber vorgesehen, dass der primäre Raumwinkelbereich vollständig von der primären Umlenkfläche überdeckt ist. Insofern ist die Ausdehnung der primären Umlenkfläche vorzugsweise nicht größer bemessen, als zum Erfassen des Primärstrahlbündels erforderlich (bei Vorliegen eines Störfalls). Dadurch kann der Einfluss der primären Umlenkfläche auf die abgestrahlte Lichtverteilung im störungsfreien Betrieb gering gehalten werden.

Eine vorteilhafte Ausgestaltung ergibt sich dadurch, dass die primäre Umlenkfläche an einem Umlenkvorsprung vorgesehen ist, welcher sich in einem Bereich zwischen dem Wellenlängenkonverter und der Abstrahloptikeinrichtung erstreckt. Insbesondere wölbt sich der Umlenkvorsprung ausgehend von dem Wellenlängenkonverter betrachtet in einen Raumbereich zwischen Wellenlängenkonverter Abstrahloptikeinrichtung. Durch den Umlenkvorsprung wird im Störfall das unumgewandelte Laserlicht erfasst, bevor es auf die Abstrahloptikeinrichtung trifft. Es wird dadurch von vorne herein verhindert, dass potentiell gefährliches Laserlicht von der Abstrahloptikeinrichtung in Richtung der Abstrahllichtverteilung umgelenkt wird.

Der Umlenkvorsprung ist insbesondere als Sicherheitsbügel ausgebildet, welcher sich ausgehend von einem Trägerbauteil (an welchem der Wellenlängenkonverter angeordnet ist) über den Wellenlängenkonverter erstreckt. Der Sicherheitsbügel bildet dann insbesondere den Umlenkvorsprung im oben genannten Sinne.

Denkbar ist jedoch auch, dass die primäre Umlenkfläche an einem Abschnitt der Abstrahloptikeinrichtung vorgesehen ist. Insbesondere, wenn die Abstrahloptikeinrichtung als ein Reflektor ausgebildet ist, kann die primäre Umlenkfläche als entsprechend ausgeformter Oberflächenabschnitt der Abstrahloptikeinrichtung ausgebildet sein. Denkbar ist auch, dass eine Reflexionsfläche der Abstrahloptikeinrichtung eine Facette aufweist, welche die primäre Umlenkfläche bildet.

Zur weiteren Ausgestaltung kann eine sekundäre Umlenkfläche vorgesehen sein, bei störungsfreiem Betrieb im Strahlengang auf den Wellenlängenkonverter folgend angeordnet ist. Die sekundäre Umlenkfläche ist derart ausgebildet, dass Licht zu dem sekundären Detektor gelenkt wird. Dabei ist die sekundäre Umlenkfläche derart angeordnet, dass Licht aus einem Raumbereich, welcher ausgehend von dem Wellenlängenkonverter betrachtet außerhalb des primären Raumwinkelbereichs liegt, zu dem sekundären Detektor gelenkt wird. Insbesondere ist die sekundäre Umlenkfläche auch derart angeordnet, dass sie zwar außerhalb des primären Raumwinkelbereichs, jedoch innerhalb des sekundären Raumwinkelbereichs liegt (jeweils ausgehend von dem Wellenlängenkonverter betrachtet).

Vorzugsweise ist die sekundäre Umlenkfläche an einem Umlenkvorsprung vorgesehen, welcher sich im Bereich der sekundären Lichtverteilung bzw. in dem sekundären Raumwinkelbereich erstreckt. Der Umlenkvorsprung mit der sekundären Umlenkfläche kann separat und/oder beabstandet zu dem Umlenkvorsprung mit der primären Umlenkfläche ausgebildet sein. Denkbar ist auch, dass ein gemeinsamer Umlenkvorsprung vorgesehen ist, welcher sowohl die primäre Umlenkfläche, als auch die sekundäre Umlenkfläche aufweist. Dieser Umlenkvorsprung kann beispielsweise als Sicherheitsbügel mit zwei unterschiedlich gewölbten, benachbarten Oberflächenbereichen ausgebildet sein.

Denkbar ist es jedoch auch, dass die sekundäre Umlenkfläche an einem Abschnitt der Abstrahloptikeinrichtung vorgesehen ist. Ähnlich wie im Falle der primären Umlenkfläche ist dies insbesondere vorteilhaft, wenn die Abstrahloptikeinrichtung als Reflektor ausgebildet ist.

Zur weiteren Ausgestaltung ist die sekundäre Umlenkfläche derart gewölbt ausgebildet, dass das umgelenkte Licht auf den sekundären Detektor fokussiert wird. Dadurch kann erreicht werden, dass der sekundäre Detektor einen hohen Pegel für die Strahlungsintensität erfasst. Ein hoher Grundpegel des Signales des sekundären Detektors, gegenüber dem eine Änderung des Signalpegels des primären Detektors registriert wird, kann messtechnische Vorteile haben.

Grundsätzlich kann die primäre Umlenkfläche und/oder die sekundäre Umlenkfläche reflektierend und insbesondere verspiegelt ausgebildet sein. Denkbar ist jedoch auch, dass die primäre Umlenkfläche und/oder die sekundäre Umlenkfläche diffus streuend oder mattiert ausgebildet sind. Eine Ausgestaltung als diffus streuende Oberfläche hat den Vorteil, dass keine präzise Ausrichtung der Umlenkfläche in Bezug auf den jeweils zugeordneten Detektor erfolgen muss. Durch die diffus streuende Oberfläche wird stets ein gewisser Anteil des erfassten Lichtes zu dem Detektor gelenkt. Diese Ausgestaltung ist daher robust gegen geringfügige Deformierung, Formabweichung, Dejustierung oder Positionsungenauigkeit der Umlenkflächen bzw. der zugehörigen Detektoren.

Für Laserlichtquelle, Wellenlängenkonverter und primäre Umlenkfläche ist insbesondere eine lineare Anordnung in Durchstrahlkonfiguration vorteilhaft. Hierzu ist insbesondere vorgesehen, dass ein Lichtaustrittsabschnitt der Laserlichtquelle, der Wellenlängenkonverter und die primäre Umlenkfläche entlang der primären Strahlrichtung linear, d.h. entlang einer Geraden aufeinander folgend, angeordnet sind. Dabei ist der Wellenkonverter zwischen dem Lichtaustrittsabschnitt der Laserlichtquelle und der primären Umlenkfläche angeordnet. Diese Konfiguration ermöglicht eine einfache und zuverlässige Justierung.

Zur weiteren Ausgestaltung ist eine Steuereinrichtung vorgesehen, welche dazu eingerichtet ist, die Laserlichtquelle in Abhängigkeit von Signalpegeln des primären Detektors und des sekundären Detektors anzusteuern. Die in der Regel elektrischen Signalpegel repräsentieren die Messwerte, welche die Detektoren aus den erfassten Strahlungsintensitäten gewinnen.

Die Steuereinrichtung ist insbesondere zur Aktivierung und Deaktivierung der Laserlichtquelle ausgebildet. Vorzugsweise ist die Steuereinrichtung dazu eingerichtet, jeweilige Signalpegel des primären Detektors und des sekundären Detektors miteinander zu vergleichen und die Laserlichtquelle zu deaktivieren, wenn das Verhältnis der Signalpegel des primären Detektors und des sekundären Detektors oberhalb eines Schwellwertes liegt. Denkbar ist auch, dass eine Deaktivierung erfolgt, wenn die Differenz der Signalpegel des primären Detektors und des sekundären Detektors betragsmäßig oberhalb eines Schwellwertes liegt. Der Schwellwert kann in der Steuereinrichtung hinterlegt sein, beispielsweise in einer entsprechenden Speichereinrichtung.

Eine hohe Sensitivität und eine zuverlässige Erkennung von Störfällen kann dann erreicht werden, wenn die Umlenkflächen und Detektoren aufeinander abgestimmt und derart zueinander angeordnet sind, dass im störungsfreien Betrieb (das heißt bei intaktem Wellenlängenkonverter) der Signalpegel des Detektors für sekundäres Licht über dem des Detektors für primäres Licht liegt. Dies kann beispielsweise durch geeignete Abstimmung der Größen der primären und sekundären Umlenkfläche, der Empfindlichkeit der primären und sekundären Detektoren und/oder durch Anordnung zusätzlicher Filterelement im Strahlengang erfolgen.

Die Erfindung wird im Folgenden anhand der Figuren näher erläutert.

Es zeigen:
- Figur 1:: Schematische Darstellung der Sicherheitsvorkehrung mit primärem Detektor und sekundären Detektor;
- Figur 2:: Skizzierte Darstellung eines Lichtmoduls gemäß der Erfindung;
- Figur 3:: Skizzierte Darstellung zur Erläuterung weiterer Ausgestaltungen eines Lichtmoduls;
- Figur 4:: Skizzierte Darstellung zur Erläuterung wiederum weiterer Ausgestaltungen eines Lichtmoduls;
- Figur 5:: Skizzierte Darstellung zur Erläuterung weiterer Ausgestaltungen eines Lichtmoduls.

In der nachfolgenden Beschreibung sowie in den Figuren sind für identische oder einander entsprechende Merkmale jeweils dieselben Bezugszeichen verwendet.

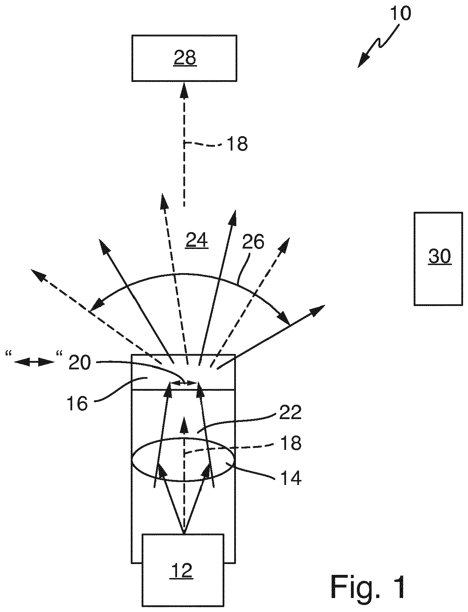

Anhand von Figur 1 wird die Funktion der Überwachung der Strahlungsintensität mit zwei Detektoren erläutert. Skizziert ist ein Ausschnitt aus einem Lichtmodul 10 mit einer Laserlichtquelle 12 (zum Beispiel Halbleiter-Laserdiode), deren abgestrahltes Laserlicht über eine optionale Primäroptik 14 auf einen Wellenlängenkonverter 16 zur Umwandlung in nutzbares Sekundärlicht trifft. Das von der Laserlichtquelle 12 abgegebene Laserlicht breitet sich entlang einer primären Strahlrichtung 18 aus und füllt vor Auftreffen auf den Wellenlängenkonverter 16 einen primären Raumwinkelbereich 20 aus. Insofern trifft ein Primärlichtbündel 22 auf den Wellenlängenkonverter 16.

Durch die Anregung mit dem Primärlichtbündel 22 strahlt der Wellenlängenkonverter 16 eine sekundäre Lichtverteilung 24 aus, welche einen sekundären Raumwinkelbereich 26 ausfüllt.

Im Gegensatz zu dem Primärlichtbündel 22, dessen Wellenlängen in einem primären Spektralbereich liegen, weist die sekundäre Lichtverteilung 24 Wellenlängen in einem sekundären Spektralbereich auf, und ist für die Zwecke der Kfz-Beleuchtung nutzbar (zum Beispiel weißes Licht). Bei störungsfreiem Betrieb stellt der Wellenkonverter 16 bei Anregung durch das Primärlichtbündel 22 die eigentliche Lichtquelle für das Nutzlicht des Lichtmoduls 10 dar. Bei störungsfreiem Normalbetrieb gewährleistet der Wellenkonverter 16 somit, dass potentiell gefährliches Laserlicht nicht direkt in die Abstrahllichtverteilung des Lichtmoduls 10 gelangt.

Bei dem Lichtmodul 10 sind zwei Detektoren zur Messung von Strahlungsintensität vorgesehen, insbesondere ein primärer Detektor 28 und ein sekundärer Detektor 30. Der primäre Detektor ist derart angeordnet, dass Strahlungsintensität in einem solchen Raumbereich messbar ist, welcher ausgehend von dem Wellenlängenkonverter 16 betrachtet in der primären Strahlrichtung 18 liegt und in dem primären Raumwinkelbereich 20 vorliegt. Insofern misst der primäre Detektor 28 die Strahlungsintensität gerade in jenem Raumbereich, welcher bei entferntem Wellenlängenkonverter 16 von dem Primärlichtbündel 22 durchsetzt wäre.

Der sekundäre Detektor 30 ist derart angeordnet, dass Strahlungsintensität in einem Bereich außerhalb des primären Raumwinkelbereichs 20 messbar ist. Im dargestellten Beispiel ist der sekundäre Detektor 30 lateral nach außen versetzt. Insbesondere ist der sekundäre Detektor 30 so angeordnet, dass Strahlungsintensität in dem sekundären Raumwinkelbereich 26, jedoch außerhalb des primären Raumwinkelbereichs 20 gemessen wird.

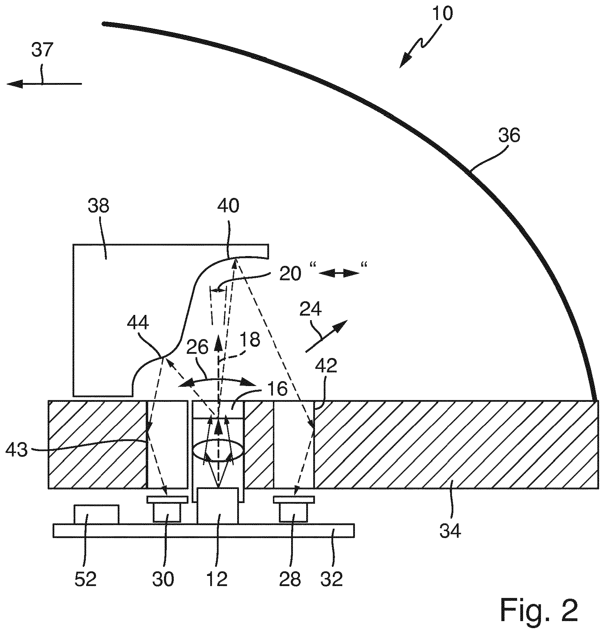

Die Figur 2 zeigt eine Gesamtansicht eines Lichtmoduls 10 mit Laserlichtquelle 12, Wellenlängenkonverter 16, primärem Detektor 28 und sekundären Detektor 30. Die Laserlichtquelle 12 und Detektoren 28, 30 können beispielsweise auf einer gemeinsamen Platine 32 angeordnet sein.

Das Lichtmodul 10 weist ein Trägerbauteil 34 auf, welches plattenartig ausgebildet ist. An dem Trägerbauteil 34 ist der Wellenlängenkonverter 16 angeordnet. Hierzu weist das Trägerbauteil 34 einen Durchbruch auf, welcher von dem Wellenlängenkonverter 16 überdeckt ist. In den Durchbruch kann beispielsweise die Laserlichtquelle 12 das Primärlichtbündel 22 einstrahlen.

Das Lichtmodul 10 umfasst eine Abstrahloptikeinrichtung 36, welche als Hohlreflektor ausgebildet sein kann, der sich beispielsweise um den Wellenlängenkonverter 16 wölbt. Beispielsweise kann die Abstrahloptikeinrichtung 36 an dem Trägerbauteil 34 angeordnet sein (siehe Figur 2). Die Abstrahloptikeinrichtung 36 erfasst einen wesentlichen Anteil der sekundären Lichtverteilung 24 und formt diese in eine Abstrahllichtverteilung 37 des Lichtmoduls 10 um.

Zur weiteren Ausgestaltung ist ein Umlenkvorsprung 38 vorgesehen. Der Umlenkvorsprung 38 überragt insbesondere eine Ebene, in welcher sich der Wellenlängenkonverter 16 erstreckt und wölbt sich über den Wellenlängenkonverter 16. Beispielsweise kann der Umlenkvorsprung an dem Trägerbauteil 34 angeordnet sein und eine Halteebene des Trägerbauteils 34 überragen, in welcher der Wellenlängenkonverter 16 angeordnet ist. Insofern kann der Umlenkvorsprung 38 als Sicherheitsbügel ausgebildet sein, welcher sich über den Wellenlängenkonverter 16 wölbt (vergleiche Figur 2).

Ein ausgehend von dem Wellenlängenkonverter 16 betrachtet den primären Raumwinkelbereich 20 überdeckender Abschnitt des Umlenkvorsprungs 38 bildet eine primäre Umlenkfläche 40. Diese ist derart ausgebildet, dass sie das auf sie treffende Licht in eine rückwärtige Richtung im Wesentlichen entgegengesetzt zur primären Strahlrichtung 18 lenkt. Der primäre Detektor 28 kann dann in einem der primären Umlenkfläche 40 gegenüberliegenden Bereich des Lichtmoduls 10 angeordnet sein. Der primäre Detektor 28 ist auf der der Umlenkfläche 40 abgewandten Seite des Wellenlängenkonverters 16 angeordnet , im dargestellten Beispiel auf der Platine 32. Das Trägerbauteil 34 weist einen entsprechenden Durchbruch 42 auf, durch welchen das von der primären Umlenkfläche 40 erfasste Licht durchtritt und auf den primären Detektor 28 trifft.

Ein ausgehend von dem Wellenlängenkonverter 16 betrachtet außerhalb des primären Raumwinkelbereichs 20 jedoch innerhalb des sekundären Raumwinkelbereichs 26 liegender Abschnitt des Umlenkvorsprungs 38 bildet eine sekundäre Umlenkfläche 44. Diese ist derart ausgebildet, dass von ihr erfasstes Licht zu dem sekundären Detektor 30 gelenkt wird. Auch hier kann vorgesehen sein, dass das Trägerbauteil 34 einen entsprechenden Durchbruch 43 aufweist, durch welchen das erfasste Licht in einen zu dem sekundären Detektor 30 gestrahlt wird.

In den Durchbrüchen 42 und 43 können beispielsweise spektrale Filterelemente (Farbfilter) oder Strahlführungsmittel angeordnet sein.

Zur weiteren Ausgestaltung kann die dem Umlenkvorsprung 38 und/oder den Flächen 40, 44 zugewandte Oberfläche des Trägerbauteils 34 geschwärzt oder absorbierend ausgebildet sein, so dass Streulichtanteile minimiert werden.

Die Umlenkfläche 40, 42 können verspiegelt ausgebildet sein. Denkbar ist jedoch auch eine diffus streuende Ausgestaltung (zum Beispiel mattiert), so dass die Umlenkung zu den Detektoren 28, 30 in Form von Streulicht erfolgt.

In einem störungsfreien Normalbetrieb bei intaktem Wellenlängenkonverter 16 ist der Einfluss des Umlenkvorsprungs 38 auf die Abstrahllichtverteilung 37 vernachlässigbar gering. Dies ist darauf zurückzuführen, dass der Umlenkvorsprung 38 nur einen vergleichsweise kleinen Raumwinkelbereich über dem Wellenlängenkonverter 16 überdeckt. Die sekundäre Lichtverteilung 24 füllt den vergleichsweise großen sekundären Raumwinkelbereich 26 aus, so dass der überdeckte Anteil durch den Umlenkvorsprung 38 nicht zu einem nennenswerten Leistungsverlust führt. Ist jedoch der Wellenlängenkonverter beispielsweise aufgrund mechanischer Einflüsse nicht im Strahlengang des Primärlichtbündels angeordnet (zum Beispiel zerbrochen), so wird das Laserlicht des Primärlichtbündels durch den Umlenkvorsprung 38 erfasst und gelangt nicht in die abgestrahlte Lichtverteilung.

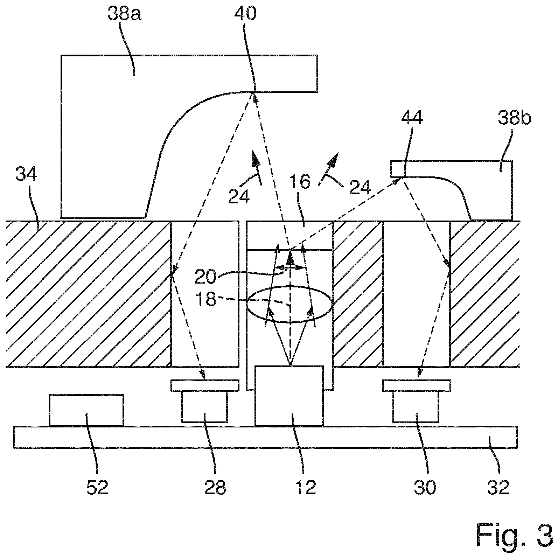

Die Figur 3 zeigt weitere Ausgestaltungen, wobei aus Gründen der Übersichtlichkeit die Abstrahloptikeinrichtung 36 (vergleiche Figur 2) nicht dargestellt ist.

Wie in Figur 3 erkennbar, können für die primäre Umlenkfläche 40 und die sekundäre Umlenkfläche 44 jeweils separate, beabstandete Umlenkvorsprünge vorgesehen sein (Umlenkvorsprung 38a für die primäre Umlenkfläche 40 und Umlenkvorsprung 38b für die sekundäre Umlenkfläche 44). Denkbar ist beispielsweise, dass der Umlenkvorsprung 38b mit der sekundären Umlenkfläche 44 an einem Randabschnitt des Trägerbauteils 34 und beabstandet von dem Wellenlängenkonverter 16 angeordnet ist. Im Übrigen kann ein Aufbau entsprechend Figur 2 verwendet werden.

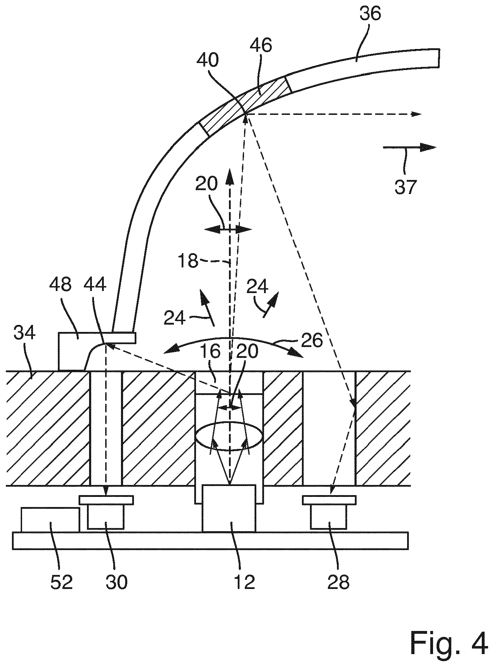

Wie in Figur 4 erkennbar kann auf einen Umlenkvorsprung für die primäre Umlenkfläche 40 verzichtet werden, wenn die primäre Umlenkfläche 40 von einem Abschnitt 46 der Abstrahloptikeinrichtung 36 gebildet ist bzw. an dem Abschnitt 46 vorgesehen ist. Grundsätzlich kann der Abschnitt 46 ein Bereich der reflektierenden Oberfläche der Abstrahloptikeinrichtung 36 sein, welcher eine abweichende Formgebung aufweist und so das erfasste Licht zu dem primären Detektor 28 lenkt. Denkbar ist jedoch auch, dass der Abschnitt 46 in die Form der Abstrahloptikeinrichtung 36 eingepasst ist und als mattierter Bereich ausgebildet ist. Dieser Bereich streut das erfasste Licht, so dass ein zur Detektion ausreichender Anteil auf den primären Detektor 28 gelenkt wird. Ist der Wellenlängenkonverter 16 in Folge von Beschädigung aus dem Strahlengang entfernt, so stellt der Abschnitt 46 dann eine Sicherheitsfunktion bereit, da aufgrund der Streuwirkung nur ein ungefährlicher Anteil des unumgewandelten Laserlichts in die abgestrahlte Lichtverteilung gelangt.

Die sekundäre Umlenkfläche 44 kann an einem Halteabschnitt 48 ausgeformt sein, mittels welchem die Abstrahloptikeinrichtung 36 an dem Trägerbauteil 34 befestigt ist.

Grundsätzlich ist auch denkbar, dass die sekundäre Umlenkfläche 44 von einem Abschnitt 50 der Abstrahloptikeinrichtung 36 bereitgestellt wird.

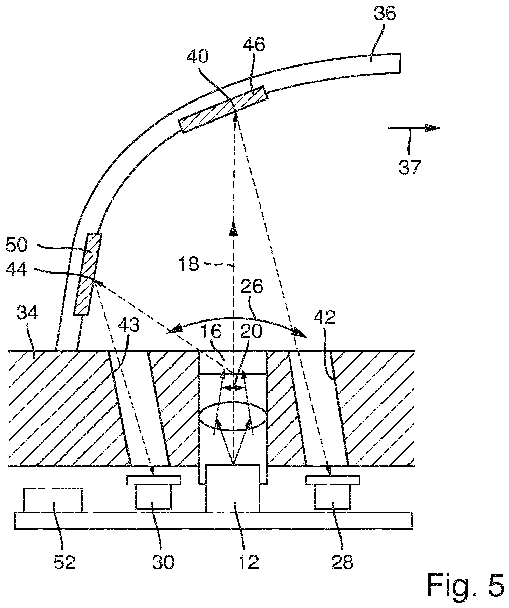

Beispielsweise kann der Abschnitt 50 als streuend wirkender, mattierter Bereich der Abstrahloptikeinrichtung 36 ausgestaltet sein (z.B. Figur 5). Der Abschnitt 50 der Abstrahloptikeinrichtung 36 streut dann einen Anteil des Lichts im sekundären Raumwinkelbereich 26 derart, dass auf den sekundären Detektor 30 trifft (siehe Figur 5). Im Beispiel der Figur 5 wird zusätzlich auch die primäre Umlenkfläche 40 von einem streuend wirkenden Abschnitt 46 der Abstrahloptikeinrichtung 36 bereitgestellt.

In der Figur 5 ist auch eine weitere Ausgestaltungsmöglichkeit für die Durchbrüche 42 und 43 des Trägerbauteils 34 gezeigt, welche grundsätzlich bei sämtlichen Ausführungsformen Anwendung finden kann. Die Durchbrüche 42 und 43 können demnach sich entlang einer Vorzugsrichtung erstreckend ausgebildet sein, wobei diese Vorzugsrichtung schräg zum Lot auf die Halteebene des Trägerbauteils 34 verläuft (in der Haltebene ist z.B. der Wellenlängenkonverter 16 gehaltert ist und erstreckt sich in der Halteebene). Durch die schräge Ausrichtung kann verhindert werden, dass beispielsweise der primäre Detektor 28 in unerwünschter Weise Streulicht von dem Abschnitt 50 der Abstrahloptikeinrichtung 36 erfasst - oder umgekehrt, dass der sekundäre Detektor 30 in unerwünschter Weise Streulicht von dem Abschnitt 46 der Abstrahloptikeinrichtung 36 erfasst.

Bei sämtlichen Ausgestaltungen kann eine Fehlfunktion des Wellenlängenkonverters 16 und insbesondere eine Beschädigung oder Entfernung des Wellenlängenkonverters dadurch erkannt werden, dass ein von dem primären Detektor 28 erfasster Signalpegel im Vergleich zu dem von dem sekundären Detektor 30 erfassten Signalpegel ansteigt. In diesem Fall kann die Laserlichtquelle 12 deaktiviert werden. Hierzu ist insbesondere eine Steuereinrichtung 52 vorgesehen, welcher die Signalpegel der Detektoren 28 und 30 zugeführt werden und welche zur Ansteuerung der Laserlichtquelle 12 mit dieser zusammenwirkt. Die Steuereinrichtung 52 kann beispielsweise auf der gemeinsamen Platine 32 zusammen mit der Laserlichtquelle 12 und/oder weiteren elektronischen Bauteilen des Lichtmoduls 10 angeordnet sein.

## Patentansprüche

1. Lichtmodul (10) für eine Kfz-Beleuchtungseinrichtung, umfassend:
- wenigstens eine Laserlichtquelle (12) zur Ausstrahlung eines Primärlichtbündels (22) aus Laserlicht mit Wellenlängen in einem primären Spektralbereich in einen primären Raumwinkelbereich (20) um eine primäre Strahlrichtung (18);
- einen Wellenlängenkonverter (16), welcher derart angeordnet ist, dass das Primärlichtbündel (22) auf den Wellenlängenkonverter (16) trifft, und welcher derart ausgebildet ist, dass durch das auftreffende Primärlichtbündel (22) eine sekundäre Lichtverteilung (24) aus Sekundärlicht mit Wellenlängen in einem sekundären Spektralbereich in einen sekundären Raumwinkelbereich (26) ausgestrahlt wird;
- eine Abstrahloptikeinrichtung (36) zum Umformen der sekundären Lichtverteilung in eine Abstrahllichtverteilung (37) des Lichtmoduls;
wobei ein primärer Detektor (28) derart vorgesehen ist, dass eine Strahlungsintensität messbar ist, die ausgehend von dem Wellenlängenkonverter (16) betrachtet innerhalb des primären Raumwinkelbereichs (20) um die primäre Strahlrichtung (18) vorliegt, wobei ein sekundärer Detektor (30) derart vorgesehen ist, dass eine Strahlungsintensität in einem Bereich messbar ist, der ausgehend von dem Wellenlängenkonverter (16) betrachtet außerhalb des primären Raumwinkelbereichs (20) liegt, wobei eine primäre Umlenkfläche (40) vorgesehen ist, welche ausgehend von dem Wellenlängenkonverter (16) betrachtet in der primären Strahlrichtung (18) angeordnet ist und derart ausgebildet ist, dass zumindest ein Anteil des auf die primäre Umlenkfläche (40) treffenden Lichts zu dem primären Detektor (28) gelenkt wird, **dadurch gekennzeichnet, dass** der primäre Detektor (28) auf der der Umlenkfläche (40) abgewandten Seite des Wellenlängenkonverters (16) auf einer Platine (32) angeordnet ist, der Anteil des auf die primäre Umlenkfläche (40) treffenden Lichts in eine rückwärtige Richtung zu dem primären Detektor (28) gelenkt wird und dass das Lichtmodul (10) ein Trägerbauteil (34) aufweist, an welchem der Wellenlängenkonverter (16) angeordnet ist, welches plattenartig ausgebildet ist, das einen Durchbruch aufweist, welcher von dem Wellenlängenkonverter überdeckt ist und das einen weiteren Durchbruch (42) aufweist, durch welchen das von der primären Umlenkfläche (40) erfasste Licht durchtritt und auf den primären Detektor (28) trifft.

2. Lichtmodul (10) nach Anspruch 1, **dadurch gekennzeichnet, dass** der primäre Detektor (28) und/oder der sekundäre Detektor (30) derart ausgebildet ist, dass nur Strahlungsintensität von Licht mit Wellenlängen im primären Spektralbereich gemessen wird.

3. Lichtmodul (10) nach einem der vorherigen Ansprüche , **dadurch gekennzeichnet, dass** die primäre Umlenkfläche (40) derart ausgebildet ist, dass sie ausgehend von dem Wellenlängenkonverter (16) betrachtet nur den primären Raumwinkelbereich (20) überdeckt.

4. Lichtmodul (10) nach wenigstens einem der vorherigen Ansprüche, **dadurch gekennzeichnet, dass** die primäre Umlenkfläche (40) an einem Umlenkvorsprung (38) vorgesehen ist, welcher sich zwischen dem Wellenlängenkonverter (16) und der Abstrahloptikeinrichtung (36) erstreckt.

5. Lichtmodul (10) nach einem der vorherigen Ansprüche, **dadurch gekennzeichnet, dass** die primäre Umlenkfläche (40) von einem Abschnitt (46) der Abstrahloptikeinrichtung (36) gebildet ist.

6. Lichtmodul (10) nach einem der vorherigen Ansprüche, **dadurch gekennzeichnet, dass** eine sekundäre Umlenkfläche (44) vorgesehen ist, welche derart ausgebildet ist, dass Licht zu dem sekundären Detektor (30) lenkbar ist aus einem Bereich, welcher ausgehend von dem Wellenlängenkonverter (16) betrachtet außerhalb des primären Raumwinkelbereichs (20) liegt.

7. Lichtmodul (10) nach Anspruch 6, **dadurch gekennzeichnet, dass** die sekundäre Umlenkfläche (44) an einem Umlenkvorsprung (38; 38b) vorgesehen ist, welcher sich im Bereich der sekundären Lichtverteilung (24) erstreckt.

8. Lichtmodul (10) nach Anspruch 6, **dadurch gekennzeichnet, dass** die sekundäre Umlenkfläche (44) von einem Abschnitt (50) der Abstrahloptikeinrichtung (36) gebildet ist.

9. Lichtmodul (10) nach einem der Ansprüche 6 bis 8, **dadurch gekennzeichnet, dass** die sekundäre Umlenkfläche (44) derart gewölbt ausgebildet ist, dass das umgelenkte Licht auf den sekundären Detektor (30) fokussiert wird.

10. Lichtmodul (10) nach Anspruch 1 und/oder Anspruch 6, **dadurch gekennzeichnet, dass** die primäre Umlenkfläche (40) und/oder die sekundäre Umlenkfläche (44) diffus streuend ausgebildet ist.

11. Lichtmodul (10) nach wenigstens Anspruch 1, **dadurch gekennzeichnet, dass** ein Lichtaustrittsabschnitt der Laserlichtquelle (12), der Wellenlängenkonverter (16) und die primäre Umlenkfläche (40) entlang der primären Strahlrichtung (18) linear aufeinander folgend angeordnet sind.

12. Lichtmodul (10) nach einem der vorherigen Ansprüche, **dadurch gekennzeichnet, dass** eine Steuereinrichtung (52) zur Ansteuerung der Laserlichtquelle (12) vorgesehen ist, wobei die Steuereinrichtung (52) dazu eingerichtet ist, einen Signalpegel des primären Detektors (28) und einen Signalpegel des sekundären Detektors (30) miteinander zu vergleichen und die Laserlichtquelle (12) zu deaktivieren, wenn das Verhältnis der Signalpegel des primären Detektors und des sekundären Detektors oberhalb eines Schwellwertes liegt und/oder wenn die Differenz der Signalpegel des primären Detektors und des sekundären Detektors oberhalb eines Schwellwertes liegt.

13. Lichtmodul (10) nach einem der vorherigen Ansprüche, **dadurch gekennzeichnet, dass** die primäre (40) und sekundäre (44) Umlenkfläche und/oder der primäre (28) und sekundäre (30) Detektor derart ausgebildet und aufeinander abgestimmt sind, dass bei bestimmungsgemäßem, störungsfreiem Betrieb mit intaktem Wellenlängenkonverter (16) der Signalpegel des sekundären Detektors (30) oberhalb des Signalpegels des primären Detektors (28) liegt.

## Claims

1. Light module (10) for a motor vehicle lighting device, comprising:
- at least one laser light source (12) for emitting a primary light beam (22) of laser light having wavelengths in a primary spectral range in a primary solid angle range (20) in a primary direction of radiation (18);
- a wavelength converter (16), which is arranged such that the primary light beam (22) impinges on the wavelength converter (16), and which is designed such that a secondary light distribution (24) of secondary light having wavelengths in a secondary spectral range is emitted in a secondary solid angle range (26) by means of the impinging primary light beam (22);
- an optical emission device (36) for converting the secondary light distribution into an emission light distribution (37) of the light module;
a primary detector (28) being provided in such a way that a radiation intensity can be measured which is present within the primary solid angle range (20) in the primary direction of radiation (18) as viewed from the wavelength converter (16), a secondary detector (30) being provided in such a way that a radiation intensity can be measured in a range which is outside the primary solid angle range (20) as viewed from the wavelength converter (16), a primary deflection surface (40) being provided which, as viewed from the wavelength converter (16), is arranged in the primary direction of radiation (18) and is designed in such a way that at least a portion of the light impinging on the primary deflection surface (40) is directed to the primary detector (28), **characterized in that** the primary detector (28) is arranged on a circuit board (32) on the side of the wavelength converter (16) facing away from the deflection surface (40), and the portion of the light impinging on the primary deflection surface (40) is deflected in a rearward direction to the primary detector (28), and **in that** the light module (10) has a carrier component (34) on which the wavelength converter (16) is arranged, which is of plate-like design, which has an aperture which is covered by the wavelength converter and which has a further aperture (42) through which the light detected by the primary deflection surface (40) passes and impinges on the primary detector (28).

2. Light module (10) according to claim 1, **characterized in that** the primary detector (28) and/or the secondary detector (30) is designed in such a way that only radiation intensity of light having wavelengths in the primary spectral range is measured.

3. Light module (10) according to any of the preceding claims, **characterized in that** the primary deflection surface (40) is designed in such a way that, as viewed from the wavelength converter (16), it only covers the primary solid angle range (20).

4. Light module (10) according to at least one of the preceding claims, **characterized in that** the primary deflection surface (40) is provided on a deflection projection (38) which extends between the wavelength converter (16) and the optical emission device (36).

5. Light module (10) according to any of the preceding claims, **characterized in that** the primary deflection surface (40) is formed by a portion (46) of the optical emission device (36).

6. Light module (10) according to any of the preceding claims, **characterized in that** a secondary deflection surface (44) is provided, which is designed in such a way that light can be directed to the secondary detector (30) from a region which, as viewed from the wavelength converter (16), lies outside the primary solid angle range (20).

7. Light module (10) according to claim 6, **characterized in that** the secondary deflection surface (44) is provided on a deflection projection (38; 38b) which extends in the region of the secondary light distribution (24).

8. Light module (10) according to claim 6, **characterized in that** the secondary deflection surface (44) is formed by a portion (50) of the optical emission device (36).

9. Light module (10) according to any of claims 6 to 8, **characterized in that** the secondary deflection surface (44) is curved in such a way that the directed light is focused onto the secondary detector (30).

10. Light module (10) according to claim 1 and/or claim 6, **characterized in that** the primary deflection surface (40) and/or the secondary deflection surface (44) is designed to be diffusely scattering.

11. Light module (10) according to at least claim 1, **characterized in that** a light exit section of the laser light source (12), the wavelength converter (16) and the primary deflection surface (40) are arranged in linear succession along the primary direction of radiation (18).

12. Light module (10) according to any of the preceding claims, **characterized in that** a control device (52) is provided for controlling the laser light source (12), the control device (52) being designed to compare a signal level of the primary detector (28) and a signal level of the secondary detector (30) with one another, and to deactivate the laser light source (12) if the ratio of the signal levels of the primary detector and the secondary detector is above a threshold value and/or if the difference between the signal levels of the primary detector and the secondary detector is above a threshold value.

13. Light module (10) according to any of the preceding claims, **characterized in that** the primary deflection surface (40) and secondary deflection surface (44) and/or the primary detector (28) and secondary detector (30) are designed and matched to one another in such a way that, during interference-free operation as intended, with an intact wavelength converter (16), the signal level of the secondary detector (30) is above the signal level of the primary detector (28).

## Revendications

1. Module de lumière (10) pour un dispositif d'éclairage de véhicule automobile, comprenant:
- au moins une source de lumière laser (12) pour émettre un faisceau de lumière primaire (22) constitué de lumière laser ayant des longueurs d'onde dans une plage spectrale primaire, dans une plage d'angle solide primaire (20) autour d'une direction de faisceau primaire (18);
- un convertisseur de longueur d'onde (16) qui est disposé de telle sorte que le faisceau de lumière primaire (22) frappe le convertisseur de longueur d'onde (16), et qui est conçu de telle sorte que, dû au faisceau de lumière primaire (22) incident, une répartition de lumière secondaire (24) constitué de lumière secondaire ayant des longueurs d'onde dans une plage spectrale secondaire est émis dans une plage d'angle solide secondaire (26);
- un dispositif optique d'émission (36) pour transformer la répartition de lumière secondaire en une répartition de lumière rayonnante (37) du module de lumière;
dans lequel un détecteur primaire (28) est prévu de telle sorte qu'une intensité de rayonnement puisse être mesurée qui, vue depuis le convertisseur de longueur d'onde (16), est présente dans la plage d'angle solide primaire (20) autour de la direction de faisceau primaire (18),
dans lequel un détecteur secondaire (30) est prévu de telle sorte qu'une intensité de rayonnement puisse être mesurée dans une plage qui, vue depuis le convertisseur de longueur d'onde (16), se situe en dehors de la plage d'angle solide primaire (20), dans lequel une surface de déviation primaire (40) est prévue qui, vue depuis le convertisseur de longueur d'onde (16), est disposée dans la direction de faisceau primaire (18) et est conçue de telle sorte qu'au moins une proportion de la lumière frappant la surface de déviation primaire (40) est dirigée vers le détecteur primaire (28), **caractérisé par le fait que** le détecteur primaire (28) est disposé, sur le côté du convertisseur de longueur d'onde (16) montrant dans la direction opposée à la surface de déviation (40), sur une carte de circuit imprimé (32), que la proportion de la lumière frappant la surface de déviation primaire (40) est dirigée dans une direction arrière vers le détecteur primaire (28) et que le module de lumière (10) présente un composant porteur (34) sur lequel est disposé le convertisseur de longueur d'onde (16), lequel est conçu de type plaque, lequel présente une percée qui est recouverte par le convertisseur de longueur d'onde, et lequel présente une autre percée (42) à travers laquelle la lumière détectée par la surface de déviation primaire (40) passe et frappe le détecteur primaire (28).

2. Module de lumière (10) selon la revendication 1, **caractérisé par le fait que** le détecteur primaire (28) et/ou le détecteur secondaire (30) est conçu de telle sorte que seule de l'intensité de rayonnement de lumière ayant des longueurs d'onde dans la plage spectrale primaire est mesurée.

3. Module de lumière (10) selon l'une quelconque des revendications précédentes, **caractérisé par le fait que** la surface de déviation primaire (40) est conçue de telle sorte que, vue depuis le convertisseur de longueur d'onde (16), elle ne recouvre que la plage d'angle solide primaire (20).

4. Module de lumière (10) selon l'une au moins des revendications précédentes, **caractérisé par le fait que** la surface de déviation primaire (40) est prévue sur une saillie de déviation (38) qui s'étend entre le convertisseur de longueur d'onde (16) et le dispositif optique d'émission (36).

5. Module de lumière (10) selon l'une quelconque des revendications précédentes, **caractérisé par le fait que** la surface de déviation primaire (40) est formée par une section (46) du dispositif optique d'émission (36).

6. Module de lumière (10) selon l'une quelconque des revendications précédentes, **caractérisé par le fait qu'**il est prévu une surface de déviation secondaire (44) qui est conçue de telle sorte que de la lumière puisse être dirigée vers le détecteur secondaire (30) à partir d'une zone qui, vue depuis le convertisseur de longueur d'onde (16), se situe en dehors de la plage d'angle solide primaire (20).

7. Module de lumière (10) selon la revendication 6, **caractérisé par le fait que** la surface de déviation secondaire (44) est prévue sur une saillie de déviation (38; 38b) qui s'étend dans la zone de la répartition de lumière secondaire (24).

8. Module de lumière (10) selon la revendication 6, **caractérisé par le fait que** la surface de déviation secondaire (44) est formée par une section (50) du dispositif optique d'émission (36).

9. Module de lumière (10) selon l'une quelconque des revendications 6 à 8, **caractérisé par le fait que** la surface de déviation secondaire (44) est bombée de telle sorte que la lumière déviée soit focalisée sur le détecteur secondaire (30).

10. Module de lumière (10) selon la revendication 1 et/ou la revendication 6, **caractérisé par le fait que** la surface de déviation primaire (40) et/ou la surface de déviation secondaire (44) est conçue pour disperser de manière diffuse.

11. Module de lumière (10) selon au moins la revendication 1, **caractérisé par le fait qu'**une section de sortie de lumière de la source de lumière laser (12), le convertisseur de longueur d'onde (16) et la surface de déviation primaire (40) sont disposés linéairement l'un après l'autre le long de la direction de faisceau primaire (18).

12. Module de lumière (10) selon l'une quelconque des revendications précédentes, **caractérisé par le fait qu'**un dispositif de commande (52) est prévu pour commander la source de lumière laser (12), dans lequel le dispositif de commande (52) est configuré pour comparer l'un à l'autre un niveau de signal du détecteur primaire (28) et un niveau de signal du détecteur secondaire (30) et pour désactiver la source de lumière laser (12) si le rapport des niveaux de signal du détecteur primaire et du détecteur secondaire est supérieur à une valeur de seuil et/ou si la différence des niveaux de signal du détecteur primaire et du détecteur secondaire est supérieure à une valeur de seuil.

13. Module de lumière (10) selon l'une quelconque des revendications précédentes, **caractérisé par le fait que** les surfaces de déviation primaire (40) et secondaire (44) et/ou les détecteurs primaire (28) et secondaire (30) sont conçus et coordonnés l'un(e) avec l'autre de telle sorte que, dans le cas d'un fonctionnement normal et sans problème avec le convertisseur de longueur d'onde (16) intact, le niveau de signal du détecteur secondaire (30) soit supérieur au niveau de signal du détecteur primaire (28).
